(19) Europäisches Patentamt / European Patent Office / Office européen des brevets

(11) **EP 4 159 811 A1**

(12) **EUROPEAN PATENT APPLICATION**
published in accordance with Art. 153(4) EPC

(43) Date of publication:
**05.04.2023 Bulletin 2023/14**

(21) Application number: **21813887.3**

(22) Date of filing: **27.05.2021**

(51) International Patent Classification (IPC):
**C08L 67/00** *(2006.01)*          **C08L 89/00** *(2006.01)*
**C08L 101/16** *(2006.01)*

(52) Cooperative Patent Classification (CPC):
**C08L 67/00; C08L 89/00; C08L 101/16;**
Y02W 30/62

(86) International application number:
**PCT/JP2021/020286**

(87) International publication number:
**WO 2021/241712 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2020   JP 2020093460**

(71) Applicant: **Mitsubishi Chemical Corporation
Chiyoda-ku
Tokyo 100-8251 (JP)**

(72) Inventors:
• **MURAKAMI, Ryo
  Tokyo 100-8251 (JP)**
• **MIYAMACHI, Remi
  Tokyo 100-8251 (JP)**

(74) Representative: **Vossius & Partner
Patentanwälte Rechtsanwälte mbB
Siebertstraße 3
81675 München (DE)**

(54) **BIODEGRADABLE RESIN COMPOSITION AND BIODEGRADABLE RESIN MOLDED ARTICLES**

(57)     A biodegradable resin composition containing a resin and a protein, the resin being contained in an amount of 40 to 99.9% by mass in the resin composition, the resin containing a polyester-based resin, the polyester-based resin having three or more structural units, at least one of the structural units being selected from a succinic acid unit, an azelaic acid unit, a sebacic acid unit, and a brassylic acid unit. It is possible to provide a biodegradable resin composition that can increase the speed of biodegradation and the percentage of degradation of a polyester-based resin in the sea and that has good moldability and a molded article of the biodegradable resin composition.

**Description**

Technical Field

The present invention relates to a biodegradable resin composition and a biodegradable resin molded article. More particularly, the present invention relates to a biodegradable resin composition that is biodegradable at a speed adapted for biodegradation in the sea, and a biodegradable resin molded article obtained by molding the biodegradable resin composition.

Background Art

In recent years, there have been visible concerns about disruption of the ecosystem and environmental pollution due to disposal and the like of plastic products. For example, in Europe, regulations and lows prohibiting the use of disposable plastic shopping bags and disposable plastic containers, such as cups and trays, in retail business are being established, and various regulations are being enacted in many countries in the world from the viewpoint of preventing the environmental pollution and the like. Recently, as a product using a biodegradable plastic, for example, plastic products that can be composted in ordinary homes (home-compostable product) have been sought. In addition, plastics discarded into the sea have also become a problem in recent years.

As a means for solving the above problems, studies about biodegradable materials that are degraded into carbon dioxide and water by microorganisms in the soil have been made, and polybutylene succinate (hereinafter abbreviated as PBS) and the like are known.

PTL 1 discloses, as a biodegradable plastic having an increased speed of biodegradation in the soil, a composition containing a biodegradable resin, a watersoluble organic nitrogen compound, and an inorganic component that promotes the growth of microorganisms.

Citation List

Patent Literature

PTL 1: JP 2012-505271 T

Summary of Invention

Technical Problem

However, resins that are biodegraded in the sea have not sufficiently studied yet. Although it has been shown that biodegradation of the resin composition disclosed in PTL 1 and a molded article obtained therefrom in the soil and a compost is promoted, biodegradation in the sea is not mentioned. In the sea, degradation is required under conditions (for example, in an environment of low temperature, in water, high concentration of salt, low nutrition, hypoxia, and small numbers of microorganisms) significantly different from the conditions of the biodegradation in composts and the soil under which conventional biodegradable plastics are degraded.

The present invention is made in view of the above background, and an object of the present invention is to provide a biodegradable resin composition that can increase the speed of biodegradation or the percentage of degradation of a polyester-based resin in the sea and that has good moldability, and a molded article of the same.

Solution to Problem

The present inventors have made intensive and extensive studies to solve the above problems. As a result, they have found, based on the idea that a protein may contribute to promotion of biodegradation in the sea, that, by incorporating a specific amount of a protein in a specific polyester-based resin, a biodegradable resin composition that has a superior biodegradability in the sea and has moldability and a molded article thereof can be obtained, thus achieving the present invention.

Specifically, the gist of the present invention consists in the following [1] to [10].

[1] A biodegradable resin composition containing a resin and a protein, the resin being contained in an amount of 40 to 99.9% by mass in the resin composition, the resin containing a polyester-based resin, the polyester-based resin having three or more structural units, at least one of the structural units being selected from a succinic acid unit, an azelaic acid unit, a sebacic acid unit, and a brassylic acid unit, provided that a degradation promoter for a biodegradable resin is excluded, the degradation promoter for a biodegradable resin containing cellulose, hemicellulose, and lignin, having a mass ratio of nitrogen to carbon of 0.04 or more, and having a mass ratio of a content of hemicellulose to a total content of cellulose and lignin of 0.2 or more.

[2] The biodegradable resin composition according to the above [1], wherein the polyester-based resin has an enthalpy of fusion as defined below of 10 to 300 J/g: (enthalpy of fusion)

using a differential scanning calorimeter "DSC7020" manufactured by Hitachi High-Tech Science Corporation, the temperature is increased from 25°C to 200°C at 10°C/min, then is decreased from 200°C to -50°C at 10°C/min, and then, is further increased from -50°C to 200°C at 10°C/min as a second temperature increase, and an area of an endothermic peak corresponding to fusion of a sample during the second temperature increase is taken as the enthalpy of fusion ($\Delta$Hm).

[3] The biodegradable resin composition according to the above [1] or [2], wherein the polyester-based resin is at least one selected from the group consisting of polybutylene succinate adipate (PBSA), polybutylene glutarate azelate (PBGAz), polybutylene succinate sebacate (PBSSe), polybutylene sebacate terephthalate (PBSeT), and polybutylene glutarate brassylate (PBGBr).

[4] The biodegradable resin composition according to any one of the above [1] to [3], wherein the protein has a molecular weight of 10,000 or more.

[5] The biodegradable resin composition according to any one of the above [1] to [4], wherein the protein has an average particular diameter of 1 to 150 $\mu$m.

[6] The biodegradable resin composition according to any one of the above [1] to [5], wherein the biodegradable resin composition has a concentration of nitrogen atoms originating from the protein contained therein of 50 ppm by mass or more.

[7] The biodegradable resin composition according to any one of the above [1] to [6], wherein the protein is at least one selected from the group consisting of casein, zein, albumin, gelatin, and gluten.

[8] A biodegradable resin molded article obtained by molding the biodegradable resin composition according to any one of the above [1] to [7].

[9] The biodegradable resin molded article according to the above [8], wherein the biodegradable resin molded article is a film or a sheet.

[10] A method of biodegrading a polyester-based resin, the method including biodegrading the polyester-based resin in sea water in the presence of a protein. Advantageous Effects of Invention

According to the present invention, it is possible to provide a biodegradable resin composition excellent in biodegradability in the sea and moldability, and a biodegradable resin molded article excellent in biodegradability.

Description of Embodiments

Embodiments of the present invention will be described below.

The present invention is not limited to the following description, and can be implemented with any modification without departing from the gist of the present invention. Note that, when a numerical value or a property value is expressed by numerical values or property values with "to" therebetween in this description, the numerical values or property values before and after the "to" are included in the range.

The biodegradable resin composition of the present invention contains a resin and a protein (hereinafter sometimes referred to as "the protein according to the present invention" or simply as "the protein"). The resin is contained in the resin composition preferably in an amount of 40 to 99.9% by mass. The resin contains a polyester-based resin (hereinafter sometimes referred to as "the polyester-based resin according to the present invention" or simply as "the polyester-based resin"), the polyester-based resin has three or more structural units, at least one of which is preferably selected from a succinic acid unit, an azelaic acid unit, a sebacic acid unit, and a brassylic acid unit. However, from the biodegradable resin composition of the present invention, a degradation promoter for a biodegradable resin, which degradation promoter for a biodegradable resin contains cellulose, hemicellulose, and lignin, has a mass ratio of nitrogen to carbon of 0.04 or more, and has a mass ratio of the content of hemicellulose to the total content of cellulose and lignin of 0.2 or more, is excluded.

From the biodegradable resin composition of the present invention, a biodegradable thermoplastic pellet that contains at least caseinate and/or casein, a plasticizer, and a biodegradable polyester is also excluded.

The constituents will be described in detail below.

[Protein]

The biodegradable resin composition of the present invention is characterized by containing a protein in a certain amount relative to a polyester-based resin.

Examples of the protein used in the present invention include zein, gluten, gelatin, casein, and salts thereof, whey protein, albumin, keratin, fibroin, and protamine. Besides, a protein artificially synthesized by an enzymic reaction, a peptide solid phase synthetic method, or a method using a transgenic organism can also be used. Among them, casein, zein, albumin, gelatin, and gluten are preferred, and casein and albumin are more preferred.

The amount of the protein contained in the biodegradable resin composition of the present invention is, because of superior biodegradation promoting effect and mechanical properties, preferably 0.1% by mass or more, more preferably 0.2% by mass or more, further preferably 0.3% by mass or more, and particularly preferably 0.5% by mass or more, whereas preferably 60% by mass or less, more preferably 50% by mass or less, further preferably 40% by mass or less, and particularly preferably 30% by mass or less. The protein is preferably contained in an amount of 0.1 to 70 parts by mass relative to 100 parts by mass of the polyester-based resin.

One protein or two or more proteins may be contained in the biodegradable resin composition of the present invention.

The biodegradable resin composition of the present invention can be obtained by mixing the protein with a polyester-based resin at a certain ratio. The protein can be used, as it is without separation or purification from a natural product or the like containing the protein, in a mixture with a polyester-based resin as long as the required mechanical properties, moldability, and the like are impaired. In this case, while the production cost can be kept low, the appearance and the sense of touch of a molded article may be deteriorated or an odor may be generated. The degree of purification of the protein can be appropriately selected in consideration of the quality and cost required depending on the intended use of the molded article.

The type of the protein is not particularly limited, but a protein having a molecular weight of 10,000 or more can be particularly suitably used. The molecular weight of the protein is more preferably 12,000 or more, and particularly preferably 15,000 or more. A protein having a high molecular weight is not dissolved in sea water in a short period of time, and tends to sufficiently exhibit the biodegradation promoting effect. On the other hand, the upper limit of the molecular weight of the protein is not particularly limited, but in general the molecular weight is 5,000,000 or less. When the protein is a polymer, the weight average molecular weight thereof is adopted as the molecular weight.

The molecular weight of the protein can be generally measured by a known method, such as an SDS polyacrylamide gel electrophoresis (SDS-PAGE) or a gel permeation chromatography (GPC). In the SDS-PAGE method, the protein is first modified with sodium dodecyl sulfate (SDS) so that the molecular chain of the protein has a negative charge proportional to the chain length. The modified protein is injected into an end of polyacrylamide gel and an electric field is applied to electrophorese the protein, and the moving distance is compared with that of a protein having a known molecular weight. Thus, the molecular weight can be measured. When the protein is soluble in water or another solvent, the molecular weight can also be measured by GPC.

The concentration of nitrogen atoms originating from the protein contained in the biodegradable resin composition is preferably 50 ppm by mass or more, more preferably 70 ppm by mass or more, further preferably 100 ppm by mass or more, particularly preferably 200 ppm by mass or more, and most preferably 500 ppm by mass or more since the biodegradation promoting effect is then easily exhibited. On the other hand, the concentration is preferably 19% by mass or less, more preferably 10% by mass or less, and further preferably 5% by mass or less since the basicity is then not so high and thus the activity of microorganisms is less liable to decrease.

The average particular diameter of the protein is, from the viewpoint of easier mixing with a polyester-based resin, leading to prevention of poor appearance and easy achievement of the biodegradability promoting effect, preferably 150 $\mu$m or less, more preferably 130 pm or less, further preferably 100 $\mu$m or less, and particularly preferably 80 $\mu$m or less. For achieving, in addition to the biodegradation promoting effect, good mechanical properties and good appearance, the average particular diameter is preferably 15 $\mu$m or less, and particularly preferably 10 $\mu$m or less. The lower limit is not particularly limited, but from the viewpoint of workability (scattering, attachment due to electrification, and the like), is preferably 1 $\mu$m or more, more preferably 2 $\mu$m or more, and further preferably 4 $\mu$m or more.

Here, the particle diameter of the protein is generally measured by a sieving method, but various known methods, such as a laser diffraction method and a microscopic method, can also be used.

As described above, the average particular diameter of the protein used in the present invention is preferably 1 to 150 $\mu$m, and a biodegradable resin composition containing a polyester-based resin and a protein having an average particular diameter of 1 to 150 $\mu$m is an embodiment of the present invention.

In this embodiment, the content of the protein is, because of superior biodegradation promoting effect and mechanical properties, relative to 100 parts by mass of the polyester-based resin, preferably 0.1 to 70 parts by mass, more preferably 0.2 to 60 parts by mass, further preferably 0.3 to 50 parts by mass, particularly preferably 0.5 to 40 parts by mass, and especially preferably 1 to 30 parts by mass.

As the protein contained in the biodegradable resin composition of the present invention, one protein can be used alone or two or more proteins can be used in combination.

The mechanism of the sea-biodegradation promoting effect of a protein is considered as follows.

An example of the polyester-based resin that is suitably used in the biodegradable resin composition of the present invention is polybutylene succinate/adipate (PBSA) which is an aliphatic polyester-based resin. PBSA is characterized by having superior moldability as compared to polyhydroxyalkanoate (PHA) and the like, but the solo use thereof is insufficient in the biodegradability in the sea. The reason is considered that the population of microorganisms that can degrade PBSA and the amount of nutrients required for proliferation of microorganisms are smaller in the sea than in the soil or a compost. In particular, since main constitutional elements of the biodegradable resin are carbon, oxygen, and hydrogen, it is considered that the amount of nitrogen is not enough for microorganisms to proliferate to biodegrade a resin. Thus, the biodegradable resin composition of the present invention contains a protein as a nitrogen source usable by microorganisms, and therefore promotes proliferation of microorganisms on the surface of a biodegradable resin molded article, allowing the microorganisms to rapidly biodegrade the molded article.

In addition, the present inventors have focused on formation of a biofilm required for the biodegradation in sea water and have considered that a specific polyamine promotes the formation of a biofilm to accelerate the biodegradation of a polyester-based resin. Then, the biodegradation promoting effect by a protein was seen, and thus the present inventors have presumed that an amino acid produced by degradation of a protein in sea water promotes the formation of a biofilm and thus promotes the biodegradation in sea water.

[Polyester-based Resin]

The polyester-based resin contained in the biodegradable resin composition of the present invention is not particularly limited as long as it has three or more structural units, at least one of which is selected form a succinic acid unit, an azelaic acid unit, a sebacic acid unit, and a brassylic acid unit. The polyester-based resin according to the present invention is preferably a biodegradable resin since the biodegradation promoting effect by a protein then tends to be more effectively exhibited, and is more preferably a sea-biodegradable resin.

Each structural unit in the polyester-based resin may originate from a compound derived from a petroleum or may originate from a compound derived from a plant material, but preferably originates from a compound derived from a plant material.

Each polyester-based resin will be described below.

Note that each repeating unit in the polyester-based resin is also referred to as a compound unit corresponding to a compound from which the repeating unit originates. For example, a repeating unit originating from an aliphatic diol is also referred to as "aliphatic diol unit", a repeating unit originating from an aliphatic dicarboxylic acid is also referred to as "aliphatic dicarboxylic acid unit", and a repeating unit originating from an aromatic dicarboxylic acid is also referred to as "aromatic dicarboxylic acid unit".

The "main structural unit" in a polyester-based resin generally means a structural unit that is contained in an amount of 80% by mass or more in the polyester-based resin, and in some cases, no structural unit other than the main structural unit is contained.

As the polyester-based resin, one polyester-based resin may be used or two or more polyester-based resins that are different in the types of structural units, the ratio of the structural units, the production method, the properties, or the like may be used in blend. A resin other than the polyester-based resin may be used together to the extent that the effect of the present invention is not impaired. When a resin other than the polyester-based resin is used together, it is preferred that a biodegradable resin is used together.

The polyester-based resin according to the present invention has three or more structural units. It is considered that, since the polyester-based resin has three or more structural units, the crystallinity of the polyester-based resin decreases, resulting in more amorphous portion, and thus the biodegradation is more promoted.

The polyester-based resin according to the present invention has at least one aliphatic dicarboxylic acid unit of a succinic acid unit, an azelaic acid unit, a sebacic acid unit, and a brassylic acid unit. A polyester-based resin having a dicarboxylic acid unit and a diol unit is more preferred since the biodegradability of such a polyester-based resin tends to be enhanced in a resin composition also containing a protein. In other words, the polyester-based resin is preferably an aliphatic polyester-based resin having an aliphatic diol unit and an aliphatic dicarboxylic acid unit as main structural units (hereinafter sometimes referred to as "aliphatic polyester-based resin (A)"), or an aliphatic-aromatic polyester-based resin (B) that is obtained by replacing at least a part of the repeating units of the aliphatic polyester-based resin (A) with an aromatic compound unit.

<Diol Unit>

The diol unit of the polyester-based resin may be aliphatic or aromatic, but, because of easier biodegradation, is preferably aliphatic, and particularly preferably a diol unit represented by the following general formula (1). As the diol unit, the polyester-based resin may have one diol unit or two or more diol units in any combination and at any ratio, and may have an aliphatic diol unit and an aromatic diol unit. When the polyester-based resin has two or more diol units, aliphatic diol units are preferably contained in an amount of 30% by mole or more based on all the diol units, and more preferably 50% by mole or more.

$$-O-R^1-O- \qquad (1)$$

In the formula (1), $R^1$ represents a divalent aliphatic hydrocarbon group.

The number of carbon atoms of the divalent aliphatic hydrocarbon group represented by $R^1$ is preferably 2 or more and more preferably 4 or more from the viewpoint of moldability, mechanical strength, and the like. On the other hand, the number of carbon atoms is preferably 20 or less, more preferably 16 or less, further preferably 12 or less, and particularly preferably 6 or less. The aliphatic hydrocarbon group is particularly preferably an aliphatic hydrocarbon group having 4 carbon atoms.

As an aliphatic diol that provides the diol unit represented by the formula (1), specifically, for example, ethylene glycol, 1,3-propanediol, 1,4-butanediol, 1,4-cyclohexanedimethanol, or the like is preferred, and among them, 1,4-butanediol is particularly preferred. Note that two or more types may be used as the aliphatic diol unit.

The diol unit contained in the polyester-based resin may contain an aromatic diol unit. Specific examples of an aromatic diol component that provides an aromatic diol unit include xylylene glycol, 4,4'-dihydroxybiphenyl, 2,2-bis(4'-hydroxyphenyl)propane, 2,2-bis(4'-6-hydroxyethoxyphenyl)propane, bis(4-hydroxyphenyl)sulfone, and bis(4-6-hydroxyethoxyphenyl)sulfonic acid. The diol component may be a derivative of an aromatic diol compound. The aromatic diol component may be a compound having a structure obtained by dehydration condensation of plural aliphatic diol compounds and/or aromatic diol compounds with each other.

<Dicarboxylic Acid Unit>

The polyester-based resin according to the present invention has an aliphatic dicarboxylic acid unit. Since the polyester-based resin has an aliphatic dicarboxylic acid unit, the biodegradation promoting effect by a protein is easily exhibited. As the dicarboxylic acid unit, the polyester-based resin may have one or two or more dicarboxylic acid units in any combination and at any ratio, but preferably has two or more dicarboxylic acid units. When the polyester-based resin has two or more dicarboxylic acid units, the polyester-based resin may have only aliphatic units or may additionally have an aromatic unit.

When the polyester-based resin has two or more dicarboxylic acid units, the aliphatic dicarboxylic acid unit is preferably contained in an amount of 30% by mole or more based on all the dicarboxylic acid units, and more preferably 40% by mole or more. On the other hand, the upper limit of the content of the aliphatic dicarboxylic acid unit is 100% by mole. When the polyester-based resin has an aromatic dicarboxylic acid unit, the aromatic dicarboxylic acid unit is preferably contained in an amount of 70% by mole or less based on all the dicarboxylic acid units, more preferably 60% by mole or less, further preferably 40% by mole or less, and particularly preferably 25% by mole or less.

The dicarboxylic acid unit contained in the polyester-based resin is preferably a dicarboxylic acid unit represented by the following general formula (2) or oxalic acid.

$$-OC-R^2-CO- \qquad (2)$$

In the formula (2), $R^2$ represents a divalent aliphatic hydrocarbon group.

The aliphatic dicarboxylic acid component that provides the aliphatic dicarboxylic acid unit represented by the formula (2) is not particularly limited, and an aliphatic dicarboxylic acid or a derivative, such as an alkyl ester, thereof that provides a desired dicarboxylic acid unit may be used.

At least one of dicarboxylic acid units of the polyester-based resin according to the present invention is selected from a succinic acid unit, an azelaic acid unit, a sebacic acid unit, and a brassylic acid unit (hereinafter, the units are sometimes collectively referred to as "essential dicarboxylic acid units"). Among them, a succinic acid unit is preferred, and a succinic acid unit and a sebacic acid unit are further preferred.

It is considered that, since succinic acid takes a short time to reach a saturated degradability of 90% in sea water, a succinic acid unit rapidly becomes a low molecular weight products in sea water, which promotes the biodegradation. An azelaic acid unit, a sebacic acid unit, and a brassylic acid unit are each not so rapidly biodegrade as a dicarboxylic acid alone as compared with succinic acid. It is, however, considered that, when the acid units are copolymerized in a polyester, the speed of sea-biodegradation increases and the unit becomes more likely to be recognized by an enzyme in sea water, which promotes the degradation.

Specific examples of the aliphatic dicarboxylic acid units other than the essential dicarboxylic acid units include units derived from oxalic acid, malonic acid, glutaric acid, pimelic acid, suberic acid, undecanedioic acid, dodecanedioic acid, and dimer acid.

When the polyester-based resin has an aromatic dicarboxylic acid unit, specific examples of the aromatic dicarboxylic acid unit include terephthalic acid, isophthalic acid, naphthalenedicarboxylic acid, diphenyldicarboxylic acid, and 2,5-furandicarboxylic acid. Among them, terephthalic acid and 2,5-furandicarboxylic acid are preferred.

The aromatic dicarboxylic acid component that provides the aromatic dicarboxylic acid unit may be a derivative of an aromatic dicarboxylic acid compound. For example, a derivative of the aromatic dicarboxylic acid components mentioned above is preferred, and among them, a lower alkyl ester having 1 or more and 4 or less carbon atoms, an acid anhydride, and the like are exemplified. Specific examples of the derivative of the aromatic dicarboxylic acid compound include a lower alkyl ester, such as a methyl ester, ethyl ester, propyl ester, or butyl ester of the aromatic dicarboxylic acid components mentioned above; and a cyclic acid anhydride of the aromatic dicarboxylic acid components mentioned above, such as succinic anhydride. Among them, dimethyl terephthalate is preferred.

When the polyester-based resin has two or more dicarboxylic acid units, combinations of succinic acid unit and adipic acid unit, succinic acid unit and sebacic acid unit, succinic acid unit and azelaic acid unit, succinic acid unit and brassylic acid unit, succinic acid unit and terephthalic acid unit, succinic acid unit and furan dicarboxylic acid unit, sebacic acid unit and terephthalic acid unit, sebacic acid unit and furan dicarboxylic acid unit, azelaic acid unit and terephthalic acid unit, brassylic acid unit and terephthalic acid unit, azelaic acid unit and glutaric acid unit, and brassylic acid unit and glutaric acid unit are preferred. Combinations of succinic acid unit and adipic acid unit, succinic acid unit and sebacic acid unit, sebacic acid unit and terephthalic acid unit, azelaic acid unit and glutaric acid unit, and brassylic acid unit and glutaric acid unit are more preferred.

More specifically, the polyester-based resin is preferably polybutylene succinate adipate (PBSA), polybutylene succinate sebacate (PBSSe), polybutylene succinate azelate (PBSAz), polybutylene succinate brassylate (PBSBr), polybutylene succinate terephthalate (PBST), polybutylene succinate furanoate (PBSF), polybutylene sebacate terephthalate (PBSeT), polybutylene sebacate furanoate (PBSeF), polybutylene azelate terephthalate (PBAzT), polybutylene brassylate terephthalate (PBBrT), polybutylene glutarate azelate (PBGAz), or polybutylene glutarate brassylate (PBGBr), more preferably polybutylene succinate adipate (PBSA), polybutylene succinate sebacate (PBSSe), polybutylene sebacate terephthalate (PBSeT), polybutylene glutarate azelate (PBGAz), or polybutylene glutarate brassylate (PBGBr).

The polyester-based resin preferably contains the essential dicarboxylic acid units in an amount of 5% by mole or more and 100% by mole or less based on all the dicarboxylic acid units since then, a biodegradable resin composition having enhanced moldability and also excellent in heat resistance and degradability can be obtained. The content is preferably 10% by mole or more, more preferably 50% by mole or more, further preferably 64% by mole or more, and particularly preferably 68% by mole or more. When two or more essential dicarboxylic acid units are contained, the content of the unit present in the highest content is preferably within the above range.

When the polyester-based resin has two or more dicarboxylic acid units, it is more preferred that the content of the unit present in the second highest content is 5% by mole or more and 50% by mole or less based on all the dicarboxylic acid units. By copolymerizing the unit of the second highest content in an amount within the above range, the crystallinity of the polyester-based resin can be decreased, and the speed of biodegradation can be increased. From the same reason, the amount of the unit is more preferably 10% by mole or more and 45% by mole or less based on all the dicarboxylic acid units, and further preferably 15% by mole or more and 40% by mole or less.

The polyester-based resin having a dicarboxylic acid unit may be a mixture of polyester-based resins having different amounts of dicarboxylic acid units. For example, a polyester-based resin having only the essential dicarboxylic acid units as the dicarboxylic acid unit and a polyester-based resin having a dicarboxylic acid unit other than the essential dicarboxylic acid units may be blended so that the proportions of the dicarboxylic acid units contained in the polyester-based resin composition is adjusted into the above range.

<Aliphatic Polyester-based Resin (A)>

The aliphatic polyester-based resin (A) used in the present invention is preferably an aliphatic polyester-based resin having an aliphatic diol unit and an aliphatic dicarboxylic acid unit as main structural units. Here, the type and amount of the structural units of the aliphatic polyester-based resin are as described above.

More specifically, the aliphatic polyester-based resin (A) is preferably a polyester-based resin having an aliphatic diol unit represented by the formula (1) and an aliphatic dicarboxylic acid unit represented by the formula (2).

The aliphatic polyester-based resin (A) may have two or more aliphatic diol units represented by the formula (1), and the aliphatic polyester-based resin (A) may have two or more aliphatic dicarboxylic acid units represented by the formula (2).

The aliphatic polyester-based resin (A) used in the present invention preferably has a proportion of succinic acid unit in all the dicarboxylic acid units of 5% by mole or more and 100% by mole or less. The aliphatic polyester-based resin (A) may be a mixture of aliphatic polyester-based resins having different amounts of succinic acid unit, and, for example, an aliphatic polyester-based resin not having any aliphatic dicarboxylic acid unit other than succinic acid (having only succinic acid unit as the aliphatic dicarboxylic acid unit) and an aliphatic polyester-based resin having an aliphatic dicarboxylic acid unit other than succinic acid can be blended and used so that the amount of succinic acid unit in the aliphatic polyester-based resin (A) is adjusted in the above suitable range.

The aliphatic polyester-based resin (A) may have a hydroxycarboxylic acid unit. In this case, the content thereof is, from the viewpoint of the moldability, preferably 20% by mole or less relative to 100% by mole of all the structural units that constitute the polyester-based resin (A), more preferably 10% by mole or less, further preferably 5% by mole or less, and most preferably 0% by mole (does not contain it).

<Aliphatic-aromatic Polyester-based Resin (B)>

The aliphatic-aromatic polyester-based resin (B) is preferably a polyester-based resin that is obtained by replacing at least a part of the repeating units of the aliphatic polyester-based resin (A) with an aromatic compound unit, preferably a polyester-based resin that is obtained by replacing a part of the aliphatic dicarboxylic acid units of the aliphatic polyester-based resin (A) with an aromatic dicarboxylic acid unit and that has an aliphatic diol unit, an aliphatic dicarboxylic acid unit, and an aromatic dicarboxylic acid unit as main structural units.

Examples of the aromatic compound unit include an aromatic diol unit having an aromatic hydrocarbon group optionally having a substituent, an aromatic dicarboxylic acid unit having an aromatic hydrocarbon group optionally having a substituent, an aromatic dicarboxylic acid unit having an aromatic heterocyclic group optionally having a substituent, and an aromatic hydroxycarboxylic acid unit having an aromatic hydrocarbon group optionally having a substituent. The aromatic hydrocarbon group and aromatic heterocyclic group may be a monocyclic group, or may be a group in which two or more rings are bound to or condensed with each other. Specific examples of the aromatic hydrocarbon group include a 1,2-phenylene group, a 1,3-phenylene group, a 1,4-phenylene group, a dinaphthylene group, and a diphenylene group. A specific example of the aromatic heterocyclic group is a 2,5-furandiyl group.

Specific examples of the aromatic hydroxycarboxylic acid component that provides an aromatic hydroxycarboxylic acid unit include p-hydroxybenzoic acid and p-6-hydroxyethoxybenzoic acid. The aromatic hydroxycarboxylic acid component may be a derivative of an aromatic hydroxycarboxylic acid compound. The aromatic hydroxycarboxylic acid component may be a compound (oligomer) having a structure obtained by dehydration condensation of two or more aliphatic hydroxycarboxylic acid compounds and/or aromatic hydroxycarboxylic acid compounds with each other. That is, an oligomer may be used as a raw material.

When optical isomers are present in the aromatic compound component that provides an aromatic compound unit, any of the D-isomer, L-isomer, and racemate may be used. The aromatic compound component is not limited to the above examples as long as it can provide an aromatic compound unit. One of the aromatic compound components may be used alone or two or more thereof may be used in any combination and at any ratio.

In the aliphatic-aromatic polyester-based resin (B), the aromatic compound unit is preferably an aromatic dicarboxylic acid unit, and in this case, the content of the aromatic dicarboxylic acid unit is, based on the total amount (100% by mole) of the aliphatic dicarboxylic acid units and aromatic dicarboxylic acid units, preferably 10% by mole or more and 80% by mole or less. As the aromatic dicarboxylic acid unit, a terephthalic acid unit or a 2,5-furandicarboxylic acid unit is preferably used, and in this case, the aliphatic-aromatic polyester-based resin (B) is preferably at least one selected from a polybutylene terephthalate succinate (PBST)-based resin, a polybutylene succinate furanoate (PBSF)-based resin, a polybutylene terephthalate sebacate (PBSeT)-based resin, a polybutylene sebacate furanoate (PBSeF)-based resin, a polybutylene terephthalate azelate (PBAzT)-based resin, and a polybutylene brassylate terephthalate (PBBrT)-based resin. The aliphatic-aromatic polyester-based resin (B) is also preferably a polybutylene-2,5-furandicarboxylate-based resin.

As the aliphatic-aromatic polyester-based resin (B), not only one aliphatic-aromatic polyester-based resin (B) can be used, but also two or more aliphatic-aromatic polyester-based resins (B) that are different in the type of structural units, the ratio of the structural units, the production method, the properties, or the like can be used in blend.

<Tri- or Higher Functional Unit>

The polyester-based resin may be a resin having an increased melt viscosity by copolymerizing a tri- or higher functional aliphatic polyhydric alcohol, a tri- or higher functional aliphatic polybasic carboxylic acid or an acid anhydride thereof, or a tri- or higher functional aliphatic polybasic hydroxycarboxylic acid component. When such a copolymerized component is used, one of such components may be used alone or two or more thereof may be used in any combination and at any ratio.

Specific examples of the trifunctional aliphatic polyhydric alcohol include trimethylolpropane and glycerol. A specific example of the tetrafunctional aliphatic polyhydric alcohol is pentaerythritol.

A specific example of the trifunctional aliphatic polybasic carboxylic acid or an acid anhydride thereof is propanetricarboxylic acid or an acid anhydride thereof. A specific example of the tetrafunctional polybasic carboxylic acid or an acid anhydride thereof is cyclopentanetetracarboxylic acid or an acid anhydride thereof.

The trifunctional aliphatic hydroxycarboxylic acids are divided into (i) a type having two carboxy groups and one hydroxy group in one molecule and (ii) a type having one carboxy group and two hydroxy groups, and either type thereof can be used. From the viewpoints of moldability, mechanical strength, appearance of a molded article, the type (i) which has two carboxy groups and one hydroxy group in one molecule, such as malic acid, is preferred, and more specifically, malic acid is preferably used. The tetrafunctional aliphatic hydroxycarboxylic acid components are divided into (i) a type having three carboxy groups and one hydroxy group in one molecule, (ii) a type having two carboxy groups and two hydroxy groups in one molecule, and (iii) a type having three hydroxy groups and one carboxy group in one molecule, and any type thereof can be used. The types having two or more carboxy groups are preferred, and more specific examples thereof include citric acid and tartaric acid.

When the polyester-based resin has a structural unit derived from such a tri- or higher functional component, the content thereof is, relative to 100% by mole of all the structural units constituting the polyester-based resin, preferably 0.01% by mole or more, and generally 5% by mole or less and preferably 2.5% by mole or less. The polyester-based resin may have no constitutional unit derived from such a tri- or higher functional component as described above.

(Method of Producing Polyester-based Resin)

In producing the polyester-based resin, a known method of producing a polyester-based resin can be adopted. Conditions in polycondensation reaction here can be set to appropriate conditions that have been conventionally used without particular limitation. In general, a method in which an esterification reaction is promoted, followed by a pressure reducing operation, thereby further increasing the polymerization degree is employed.

A polyester-based resin having a diol unit and a dicarboxylic acid unit is produced by reacting a diol component forming the diol unit and a dicarboxylic acid component forming the dicarboxylic acid unit. Here, the amounts of the diol component and the dicarboxylic acid component used are adjusted so that the produced polyester-based resin has a target composition. Although a diol component and a dicarboxylic acid component generally substantially react at equal amounts by mole, a diol component distills out during the esterification reaction and thus, the diol component is generally used in an amount that is 1 to 20% by mole larger relative to the dicarboxylic acid component.

When a component other than the essential components (an optional component), such as an aliphatic hydroxycarboxylic acid unit or a polyfunctional component unit, is contained in the polyester-based resin, a compound (monomer or oligomer) corresponding thereto is also subjected to the reaction so that the aliphatic hydroxycarboxylic acid unit or the polyfunctional component unit also provides a target composition. In this case, the timing and method of introducing the optional component into a reaction system are not limited as long as a polyester-based resin suitable for the present invention can be produced.

For example, the timing and method of introducing a hydroxycarboxylic acid unit into a reaction system are not limited as long as it is before the polycondensation reaction of the diol component and the dicarboxylic acid component, and examples of the method include (1) a method in which a catalyst is previously dissolved in a hydroxycarboxylic acid solution before mixing, and (2) a method in which a catalyst is introduced into the reaction system in charging the raw materials at the same time with mixing.

Regarding the timing of introducing a compound that forms a polyfunctional component unit, the compound may be charged at the same time with charging the other monomers or oligomers at the initial stage of polymerization, or may be charged after a transesterification reaction and before beginning the pressure reduction. The charging at the same time with the other monomers or oligomers is preferred in terms of the simplification of the process.

The polyester-based resin is produced generally in the presence of a catalyst. As the catalyst, any known catalyst that can be used for producing a polyester-based resin can be used as long as the effect of the present invention is not significantly impaired. Suitable examples thereof include compounds of a metal, such as germanium, titanium, zirconium, hafnium, antimony, tin, magnesium, calcium, or zinc. Among them, a germanium compound and a titanium compound are suitable.

Examples of the germanium compound that can be used as a catalyst include an organic germanium compound, such as tetraalkoxygermanium, and inorganic germanium compounds, such as germanium oxide and germanium chloride. Among them, in terms of the price and availability, germanium oxide, tetraethoxygermanium, tetrabutoxygermanium, and the like are preferred, and germanium oxide is particularly suitable.

Examples of the titanium compound that can be used as a catalyst include organic titanium compounds, for example, tetraalkoxytitaniums, such as tetrapropyl titanate, tetrabutyl titanate, and tetraphenyl titanate. Among them, in terms of the price and availability, tetrapropyl titanate, tetrabutyl titanate, and the like are preferred.

In addition, other catalysts can be used together as long as the object of the present invention is not impaired. One of the catalysts may be used alone or two or more thereof may be used in any combination and at any ratio.

The catalyst can be used in any amount as long as the effect of the present invention is not significantly impaired, but the amount is generally 0.0005% by mass or more relative to the amount of monomers used, more preferably 0.001% by mass or more, and generally 3% by mass or less, preferably 1.5% by mass or less. When the amount of the catalyst is larger, the effect of the catalyst is easily exhibited, whereas when the amount is reduced, the production cost is reduced, and the resulting polymer is less likely to color and is excellent in hydrolysis resistance.

The timing of introducing the catalyst is not particularly limited as long as it is before the polycondensation reaction, and the catalyst can be introduced at the time of charging the raw materials, or can be introduced at the time of starting the pressure reduction. When a hydroxycarboxylic acid unit is introduced, a method in which the catalyst is introduced together with the monomer or oligomer that forms a hydroxycarboxylic acid unit at the time of charging the raw materials or a method in which the catalyst dissolved in an aqueous hydroxycarboxylic acid solution is introduced is preferred, and a method in which the catalyst dissolved in an aqueous hydroxycarboxylic acid solution is introduced is particularly preferred in that the rate of polymerization is increased.

Reaction conditions, such as the temperature, polymerization time, and pressure, in producing the polyester-based resin may be any conditions as long as the effect of the present invention is not significantly impaired, but the reaction temperature in an esterification reaction of a dicarboxylic acid component and a diol component and/or a transesterification reaction is generally 150°C or higher, preferably 180°C or higher, whereas is generally 260°C or lower, preferably 250°C or lower. The reaction atmosphere is generally an inert atmosphere, such as under nitrogen or argon. The reaction pressure is generally a normal pressure to 10 kPa, and a normal pressure is particularly preferred. The reaction time is generally 1 hour or more, whereas is generally 10 hours or less, preferably 6 hours or less, more preferably 4 hours or less. Since the reaction temperature is not so high, excessive production of unsaturated bonds is less liable to occur, and gelation which is caused by unsaturated bonds is thus less likely to occur, leading to easy control of the polymerization.

An ester reaction of a dicarboxylic acid component and a diol component and/or a polycondensation reaction after a transesterification reaction is desirably conducted under vacuum at a pressure of generally $0.01 \times 10^3$ Pa or higher, preferably $0.03 \times 10^3$ Pa or higher, whereas generally $1.4 \times 10^3$ Pa or lower, preferably $0.4 \times 10^3$ Pa or lower. The reaction temperature here is generally 150°C or higher, preferably 180°C or higher, whereas is generally 260°C or lower, preferably 250°C or lower. The reaction time is generally 2 hours or more, whereas is generally 15 hours or less, preferably 10 hours or less. Since the reaction temperature is not so high, gelation due to unsaturated bonds which are generated by excessive production of unsaturated bonds is less likely to occur, leading to easy control of the polymerization.

In producing the polyester-based resin, a chain extender, such as a carbonate compound or a diisocyanate compound, can be used. In this case, the amount of the chain extender is, as a proportion of carbonate bonds or urethane bonds in the polyester-based resin relative to 100% by mole of all the structural units constituting the polyester-based resin, generally 10% by mole or less, preferably 5% by mole or less, more preferably 3% by mole or less. However, when a urethane bond or a carbonate bond is present in the polyester-based resin, the biodegradability may be impaired, and thus, in the present invention, relative to all the structural units constituting the aliphatic polyester-based resin, the amount of carbonate bonds is less than 1% by mole, preferably 0.5% by mole or less, and more preferably 0.1% by mole or less, and the amount of urethane bonds is 0.55% by mole or less, preferably 0.3% by mole or less, more preferably 0.12% by mole or less, and further preferably 0.05% by mole or less. This amount is, when calculated based on 100 parts by mass of polyester-based resin, 0.9 parts by mass or less, preferably 0.5 parts by mass or less, more preferably 0.2 parts by mass or less, and further preferably 0.1 parts by mass or less. In particular, when the amount of urethane bonds is within the above range, in a film forming step or the like, fuming and odor from a melt film due to decomposition of urethane bonds are suppressed, and film rupture due to foaming in a melt film is less likely to occur, leading to stable molding.

The amount of carbonate bonds or urethane bonds in the aliphatic polyester-based resin (A) can be determined by calculation from a measurement result of NMR (nuclear magnetic resonance spectrometer), such as $^1$H-NMR or $^{13}$C-NMR.

Specific examples of the carbonate compound as a chain extender include diphenyl carbonate, ditolyl carbonate, bis(chlorophenyl) carbonate, m-cresyl carbonate, dinaphthyl carbonate, dimethyl carbonate, diethyl carbonate, dibutyl carbonate, ethylene carbonate, diamyl carbonate, and dicyclohexyl carbonate. Besides, a carbonate compound that is obtained from the same type or different types of hydroxy compounds and that is derived from hydroxy compounds, such as phenols and alcohols, can also be used.

Specific examples of the diisocyanate compound include known diisocyanates, such as 2,4-tolylene diisocyanate, a mixture of 2,4-tolylene diisocyanate and 2,6-tolylene diisocyanate, 1,5-naphthylene diisocyanate, xylylene diisocyanate, hydrogenated xylylene diisocyanate, hexamethylene diisocyanate, isophorone diisocyanate, 4,4'-dicyclohexylmethane diisocyanate, tetramethylxylylene diisocyanate, 2,4,6-triisopropylphenyl diisocyanate, 4,4'-diphenylmethane diisocyanate, and tolidine diisocyanate.

As another chain extender, dioxazoline, a silicate ester, or the like may be used.

Specific examples of the silicate ester include tetramethoxysilane, dimethoxydiphenylsilane, dimethoxydimethylsilane, and diphenyldihydroxysilane.

A high molecular weight polyester-based resin obtained by using such a chain extender (coupling agent) can be produced by using a known technique. The chain extender is added, after completion of polycondensation, in a homogeneous melt state to the reaction system with no solvent and is reacted with a polyester obtained by the polycondensation.

More specifically, a polyester-based resin which is obtained by a catalyst reaction of a diol component and a dicarboxylic acid component and which has a terminal group substantially containing a hydroxy group and has a weight average molecular weight (Mw) of 20,000 or more, preferably 40,000 or more is reacted with a chain extender, whereby a polyester-based resin having an increased molecular weight can be obtained. A prepolymer having a weight average molecular weight of 20,000 or more is, due to the use of a small amount of the chain extender, not affected by a residual catalyst even under severe conditions, such as a melt state, and thus gelation does not occur in the reaction, so that a polyester-based resin having a high molecular weight can be produced. Here, the weight average molecular weight (Mw) of the polyester-based resin can be determined as a value corresponding to a monodispersed polystyrene based on measurement values of gel permeation chromatography (GPC) with chloroform as a solvent at a measurement temperature of 40°C.

Accordingly, for example, when the molecular weight of a polyester-based resin is to be further increased using the diisocyanate compound as a chain extender, a prepolymer having a weight average molecular weight of 20,000 or more, preferably 40,000 or more is preferably used. With a higher weight average molecular weight, the amount of the diisocyanate compound required for increasing the molecular weight is reduced, and thus, the heat resistance is less likely to decrease. Using such a prepolymer, a polyester-based resin having urethane bonds, which resin has a linear structure linked via urethane bonds originating from a diisocyanate compound, is produced.

The pressure in extending the chain is generally 0.01 MPa or higher and 1 MPa or lower, preferably 0.05 MPa or higher and 0.5 MPa or lower, more preferably 0.07 MPa or higher and 0.3 MPa or lower, and most preferably a normal pressure.

The reaction temperature in extending the chain is generally 100°C or higher, preferably 150°C or higher, more preferably 190°C or higher, most preferably 200°C or higher, whereas is generally 250°C or lower, preferably 240°C or lower, more preferably 230°C or lower. When the reaction temperature is in the above range, gelation or decomposition of the polyester-based resin does not occur in the reaction, and a uniform reaction can be easily performed at a viscosity for easy stirring without any high power for stirring.

The time for extending the chain is generally 0.1 minutes or more, preferably 1 minute or more, more preferably 5 minutes or more, whereas is generally 5 hours or less, preferably 1 hour or less, more preferably 30 minutes or less, most preferably 15 minutes or less. When the chain is extended in the time within the above range, the chain can be extended to a desired molecular weight, and gelation or degradation of the polyester-based resin can be prevented from occurring in the reaction.

<Properties of Polyester-based Resin>

(Molecular Weight)

The molecular weight of the polyester-based resin used in the present invention can be measured by gel permeation chromatography (GPC), and the weight average molecular weight (Mw) as determined with monodispersed polystyrenes as standard substances is generally 10,000 or more and 1,000,000 or less. Because of advantage in terms of the moldability and mechanical strength, the weight average molecular weight (Mw) is preferably 20,000 or more, more preferably 30,000 or more, further preferably 50,000 or more, whereas is preferably 800,000 or less, more preferably 600,000 or less, further preferably 500,000 or less, and particularly preferably 400,000 or less.

(Melt Flow Rate)

The melt flow rate (MFR) of the polyester-based resin as measured based on JIS K7210 (1999) at 190°C and a load of 2.16 kg is generally 0.1 g/10 min or more and 100 g/10 min or less, and from the viewpoints of the moldability and mechanical strength, is preferably 50 g/10 min or less, more preferably 40 g/10 min or less, and particularly preferably 30 g/10 min or less. The MFR of the polyester-based resin can be controlled by the molecular weight.

(Melting Point and Tensile Elastic Modulus)

The melting point of the polyester-based resin is, because of superior moldability, generally 15°C or higher, preferably 20°C or higher, more preferably 60°C or higher, further preferably 70°C or higher, particularly preferably 75°C or higher, most preferably 80°C or higher, whereas is preferably 170°C or lower, more preferably 150°C or lower, further preferably 140°C or lower, particularly preferably 130°C or lower, and most preferably 110°C or lower. When two or more melting points are present, at least one melting point is preferably within the above range.

The tensile elastic modulus of the polyester-based resin is, because of superior moldability and impact strength, preferably 60 MPa or higher, more preferably 100 MPa or higher, further preferably 140 MPa or higher, particularly preferably 180 MPa or higher, whereas is preferably 1000 MPa or lower, more preferably 700 MPa or lower, further preferably 500 MPa or lower, and particularly preferably 300 MPa or lower. That is, the tensile elastic modulus is especially preferably 180 to 1000 MPa.

The methods of controlling the melting point and the tensile elastic modulus of the polyester-based resin are not particularly limited. For example, it is possible to control them by selecting the type of dicarboxylic acid component (copolymerized component) other than the components that provide the essential dicarboxylic acid units, adjusting the ratio of components copolymerized, or combining such selection and adjustment. Note that the tensile elastic modulus is measured by a method described in the section of Examples provided later.

(Enthalpy of Fusion)

Enthalpy of fusion of a polyester-based resin is a measure of the crystallinity of the resin. The resin preferably has a lower crystallinity in that polymer molecular chains easily move to promote the biodegradation. On the other hand, the resin preferably has a higher crystallinity in terms of the moldability. Thus, the enthalpy of fusion of the polyester-based resin is preferably 10 J/g or more and 300 J/g or less. The enthalpy of fusion of the polyester-based resin is more preferably 12 J/g or more, further preferably 15 J/g or more, particularly preferably 20 J/g or more, and most preferably 30 J/g or more, whereas the enthalpy of fusion of the polyester-based resin is more preferably 200 J/g or less, further preferably 150 J/g or less, particularly preferably 100 J/g or less, and most preferably 90 J/g or less. Note that the enthalpy of fusion is measured by a method described in the section of Examples provided later.

(Glass Transition Temperature)

In biodegradation of a polyester-based resin, when the glass transition temperature is lower than a temperature in the environment around the polyester-based resin, such as in the sea, the crystal structure of the polyester-based resin is loosen, and the molecular main chain is allowed to rotate and vibrate, promoting the biodegradation. Thus, the glass transition temperature (Tg) of the polyester-based resin is preferably 40°C or lower, more preferably 30°C or lower, further preferably 25°C or lower, particularly preferably 20°C or lower, and most preferably 0°C or lower. Note that the glass transition temperature is measured by a method described in the section of Examples.

(Acid Value)

The polyester-based resin preferably has a lower acid value in that hydrolysis is less likely to occur, resulting in superior storage stability. Thus, the acid value of the polyester-based resin is preferably 250 eq/t or less, more preferably 150 eq/t or less, further preferably 100 eq/t or less, and particularly preferably 50 eq/t or less. The lower limit is not particularly limited, but is generally 3 eq/t or more. Note that the acid value is measured by a method described in the section of Examples.

(Reduced Viscosity)

The reduced viscosity ($\eta_{sp}$/c) of the polyester-based resin is appropriately selected according to the intended use and processing method. Specifically, the reduced viscosity at 30°C of the resin is preferably 0.5 dL/g or more, more preferably 0.8 dL/g or more, further preferably 1.0 dL/g or more, and particularly preferably 1.2 dL/g or more, whereas is preferably 4.0 dL/g or less, more preferably 3.0 dL/g or less, further preferably 2.5 dL/g or less, and particularly preferably 2.3 dL/g or less.

When the reduced viscosity of the polyester-based resin is within the above range, the mechanical properties when processed into a molded article can be secured, and the melt viscosity of the biodegradable resin composition when molded is such a degree that does not exert an excessive load on a molding machine, such as an extruder or an injection machine, leading to securing the productivity.

The reduced viscosity of the polyester-based resin can generally be measured by the following method. First, the resin is dissolved in a solvent to prepare a resin solution of a concentration c (g/dL). Next, using a capillary viscometer (Ubellohde's viscometer), under a condition of a temperature of 30.0°C $\pm$ 0.1°C, a passing time $t_0$ of the solvent and a passing time t of the resin solution are measured, and a relative viscosity $\eta_{rel}$ is calculated based on the following formula (i). Then, from the relative viscosity $\eta_{rel}$, a specific viscosity $\eta_{sp}$ is determined based on the following formula (ii).

$$\eta_{rel}=t/t_0 \qquad (i)$$

$$\eta_{sp}=\eta_{rel}\text{-}1 \qquad (ii)$$

By dividing the obtained specific viscosity $\eta_{sp}$ by the concentration c (g/dL), the reduced viscosity $\eta_{sp}/c$ can be obtained. Note that, in general, a higher value thereof corresponds to a larger molecular weight.

<Amount of Resins>

The biodegradable resin composition of the present invention may contain a resin other than the polyester. However, the amount of resins contained in the biodegradable resin composition of the present invention is preferably 40 to 99.9% by mass including the resin other than the polyester.

The amount of resins is preferably larger in that a resulting molded article is superior in the mechanical characteristics and appearance, whereas is preferably smaller in that the biodegradable promoting effect in sea water is easily exhibited. Thus, the amount of resins contained in the biodegradable resin composition of the present invention is preferably 45% by mass or more, more preferably 50% by mass or more, and further preferably 60% by mass or more, whereas is preferably 99% by mass or less, more preferably 95% by mass or less, and further preferably 90% by mass or less.

In terms of easily exhibiting the biodegradable promoting effect by a protein, there is preferably a larger amount of polyester-based resin in the resins. Thus, the amount of the polyester-based resin contained in the biodegradable resin composition of the present invention is preferably 40% by mass or more, more preferably 45% by mass or more, further preferably 50% by mass or more, particularly preferably 60% by mass or more, whereas is preferably 99.9% by mass or less, more preferably 99% by mass or less, further preferably 95% by mass or less, and particularly preferably 90% by mass or less.

<Other resin>

Next, the other resin that the biodegradable resin composition of the present invention can contain will be described. When the biodegradable resin composition of the present invention contains the other resin, one resin or two or more resins may be contained. Properties, such as molecular weight, melt flow rate, melting point, tensile elastic modulus, enthalpy of fusion, glass transition temperature, and reduced viscosity of the other resin are preferably in the same range as those suitable for the polyester-based resin as described above because of the same reason.

<Oxycarboxylic Acid-based Resin (C)>

An oxycarboxylic acid-based resin (C) has an oxycarboxylic acid unit as a main structural unit. The oxycarboxylic acid unit is preferably an aliphatic oxycarboxylic acid unit represented by the following formula (3).

$$-O-R^3-CO- \qquad (3)$$

(In the formula (3), $R^3$ represents a divalent aliphatic hydrocarbon group or a divalent alicyclic hydrocarbon group.)

Specific examples of an aliphatic oxycarboxylic acid component that provides the aliphatic oxycarboxylic acid unit of the formula (3) include glycolic acid, 2-hydroxy-n-butyric acid, 2-hydroxycaproic acid, 2-hydroxy-3,3-dimethyl butyric acid, 2-hydroxy-3-methylbutyric acid, 2-hydroxyisocaproic acid, 6-hydroxycaproic acid, and a mixture thereof. When optical isomers are present in the above compounds, either of the D-isomer or L-isomer may be used. Two or more of the aliphatic oxycarboxylic acid components can be used in mixture.

A urethane bond, an amide bond, a carbonate bond, an ether bond, or the like can be introduced in the oxycarboxylic acid-based resin (C) to the extent that the biodegradability is not affected.

The method of producing the oxycarboxylic acid-based resin (C) is not particularly limited, and the oxycarboxylic acid-based resin (C) can be produced by a known method, such as a direct polymerization method of a hydroxycarboxylic acid or a ring-opening polymerization method of a cyclic compound.

The molecular weight of the oxycarboxylic acid-based resin (C) can be measured by gel permeation chromatography (GPC), and the weight average molecular weight (Mw) as determined with monodispersed polystyrenes as standard substances is generally 10,000 or more and 1,000,000 or less. Because of advantage in terms of the moldability and mechanical strength, the weight average molecular weight (Mw) is preferably 20,000 or more and 500,000 or less, and more preferably 50,000 or more and 400,000 or less.

The melt flow rate (MFR) of the oxycarboxylic acid-based resin (C) as measured based on JIS K7210 (1999) at 190°C and a load of 2.16 kg is generally 0.1 g/10 min or more and 100 g/10 min or less, and from the viewpoints of the moldability and mechanical strength, is preferably 50 g/10 min or less, and particularly preferably 40 g/10 min or less. The MFR of the oxycarboxylic acid-based resin (C) can be controlled by the molecular weight.

The melting point of the oxycarboxylic acid-based resin (C) is preferably 50°C or higher, more preferably 55°C or higher, further preferably 70°C or higher, and particularly preferably 75°C or higher, whereas, is preferably 200°C or lower, more preferably 190°C or lower, further preferably 180°C or lower, particularly preferably 170°C or lower, and especially preferably 150°C or lower. When two or more melting points are present, at least one melting point is preferably within the above range.

The tensile elastic modulus of the oxycarboxylic acid-based resin (C) is preferably 180 to 1,000 MPa.

A melting point within the above range leads to superior moldability, and a tensile elastic modulus within the above range leads to superior moldability and impact strength.

Methods of controlling the melting point and the tensile elastic modulus of the oxycarboxylic acid-based resin (C) are not particularly limited, but, for example, it is possible to control them by selecting the type of the copolymerized component other than the oxycarboxylic acid, adjusting the ratio of components copolymerized, or combining such selection and adjustment.

<Polyhydroxyalkanoate (D)>

As the aliphatic oxycarboxylic acid-based resin (C), a polyhydroxyalkanoate (D) described below can be preferably used.

The polyhydroxyalkanoate (hereinafter sometimes referred to as PHA) (D) suitably used in the present invention is an aliphatic polyester having a repeating unit represented by the general formula: $[-CHR-CH_2-CO-O-]$ (wherein R represents an alkyl group having 1 to 15 carbon atoms).

From the viewpoints of the moldability and the thermal stability, the polyhydroxyalkanoate (D) used in the present invention preferably contains 3-hydroxybutyrate unit as a constitutional component in an amount of 80% by mole or more, and more preferably 85% by mole or more. The polyhydroxyalkanoate (D) that is produced by microorganisms is more preferred. Specific examples of the polyhydroxyalkanoate (D) include a poly(3-hydroxybutyrate-co-3-hydroxyhexanoate) copolymer resin and a poly(3-hydroxybutyrate-co-3-hydroxyvalerate-co-3-hydroxyhexanoate) copolymer resin.

In particular, from the viewpoints of the moldability and the properties of a resulting molded article, a poly(3-hydroxybutyrate-co-3-hydroxyhexanoate) copolymer resin, namely PHBH, is preferred.

In the polyhydroxyalkanoate (D), the constitutional ratio of 3-hydroxybutyrate (hereinafter sometimes referred to as 3HB) to a comonomer which is copolymerized therewith, such as 3-hydroxyhexanoate (hereinafter sometimes referred to as 3HH), that is, the monomer ratio, 3-hydroxybutyrate/comonomer, in the copolymer resin, is, from the viewpoints of the moldability, the quality of a molded article, and the like, preferably 97/3 to 80/20 (% by mole/% by mole), and more preferably 95/5 to 85/15 (% by mole/% by mole). With a large comonomer ratio, the molding temperature is not close to the pyrolysis temperature, leading to easy molding. With a small comonomer ratio, the polyhydroxyalkanoate (D) tends to crystallize, leading to superior productivity.

The ratio of the monomers in the polyhydroxyalkanoate (D) can be measured by gas chromatography as follows.

Into about 20 mg of dry PHA, 2 ml of a sulfuric acid/methanol mixture liquid (15/85 (mass ratio)) and 2 ml of chloroform are added and the container is tightly sealed. The mixture is heated at 100°C for 140 minutes to obtain a methyl ester of PHA degradation product. After cooling, 1.5 g of sodium hydrogen carbonate is slowly added thereto for neutralization, and the resultant is allowed to stand until generation of carbon dioxide gas stops. 4 ml of diisopropyl ether is added thereto and is mixed well, and then, the monomer unit composition of the PHA degradation product in the supernatant is analyzed by capillary gas chromatography, whereby the ratio of the monomers in the copolymer resin can be determined.

The weight average molecular weight (hereinafter sometimes referred to as Mw) of the polyhydroxyalkanoate (D) used in the present invention can be measured by the gel permeation chromatography (GPC) as described above, and the weight average molecular weight (Mw) as determined with monodispersed polystyrenes as standard substances is generally 200,000 or more and 2,500,000 or less, preferably 250,000 or more and 2,000,000 or less, and more preferably 300,000 or more and 1,000,000 or less. A weight average molecular weight within the above range leads to superior mechanical properties and moldability.

The melt flow rate (MFR) of the polyhydroxyalkanoate (D) as measured based on JIS K7210 (1999) at 190°C and a load of 2.16 kg is preferably 1 g/10 min or more and 100 g/10 min or less, and from the viewpoints of the moldability and the mechanical strength, is more preferably 80 g/10 min or less, and particularly preferably 50 g/10 min or less. The MFR of the polyhydroxyalkanoate (D) can be controlled by the molecular weight.

The melting point of the polyhydroxyalkanoate (D) is preferably 100°C or higher, more preferably 120°C or higher, preferably 180°C or lower, more preferably 170°C or lower, and particularly preferably less than 160°C. When two or more melting points are present, at least one melting point is preferably within the above range.

The polyhydroxyalkanoate (D) is produced using a microorganism, such as Alcaligenes eutrophus AC32, which is a strain obtained by inserting a PHA synthase gene originating from Aeromonas caviae into Alcaligenes eutrophus (international depositary under Budapest Treaty, International Depositary Authority: National Institute of Advanced Industrial Science and Technology, International Patent Organism Depositary (Central 6, 1-1-1 Higashi Tsukuba, Ibaraki, Japan), date of original deposit: August 12, 1996, transferred at August 7, 1997, number of the deposit: FERM BP-6038 (transferred from original deposit FERM P-15786)) (J.Bacteriol.,179,4821(1997)).

As the polyhydroxyalkanoate (D), a commercial product can be used, and examples of the commercial product of the polyhydroxyalkanoate (D) having a 3-hydroxybutyrate unit and a 3-hydroxyhexanoate unit as main structural units include "PHBH X331N", "PHBH X131A", "PHBH X151A", and "PHBH 151C" manufactured by KANEKA CORPORATION.

In the present invention, the number of the aliphatic oxycarboxylic acid-based resins (C) used is not limited to one, and two or more aliphatic oxycarboxylic acid-based resins (C), including the polyhydroxyalkanoate (D), which are different in the types or ratios of the structural units, the production method, the properties, or the like can be blended and used.

[Another Component]

The biodegradable resin composition of the present invention may contain, in addition to the protein, one or two or more additives of a filler, a plasticizer, an antistatic agent, an antioxidant, an optical stabilizer, a UV absorber, a dye, a pigment, a hydrolysis preventing agent, a crystal nucleating agent, an antiblocking agent, a weather resistant, a thermal stabilizer, a flame retardant, a mold releasing agent, an antifogging agent, a surface wetting improver, an incineration auxiliary, a dispersion assistant, various surfactants, and a slipping agent as "another component".

The biodegradable resin composition of the present invention may also contain a functional additive, such as a freshness retaining agent or an antimicrobial agent.

Any of the other components can be optionally blended to the extent that the effect of the present invention is not impaired, and one of the components may be used alone or two or more thereof may be used.

The total content of the other components in the biodegradable resin composition of the present invention is generally preferably 0.01% by mass or more and 40% by mass or less based on the entire amount of the biodegradable resin composition of the present invention, so as not to impair the properties of the biodegradable resin composition of the present invention.

[Method of Producing Biodegradable Resin Composition]

The biodegradable resin composition of the present invention can be produced by kneading the protein and the resin described above in a kneader to disperse the protein in the resin. In addition to the protein and the resin, other resins or other components which are used as required may be mixed in a kneader.

The mixing step is performed by mixing the protein, the polyester-based resin, and another resin or another component which is used as required, at a prescribed ratio simultaneously or in any order with a mixer, such as a tumbler, a V-blender, a Nauta mixer, a banbury mixer, a kneading roll, or an extruder, and preferably further melt-kneading the components.

The kneader used in the mixing step may be a melt-kneader. The extruder may be either of a twin screw extruder or a single screw extruder, but is preferably a twin screw extruder.

The temperature in melt-kneading is preferably 140 to 220°C. At a temperature within the range, the period of time required for melting reaction can be reduced, deterioration of the resin or alteration of the protein can be prevented, and physical properties for the practical use, such as impact resistance and wet heat resistance, can be enhanced. From the same point of view, the melt-kneading temperature is more preferably 150 to 210°C.

The time for melt-kneading is, from the viewpoint of securely avoiding the resin deterioration as in the above statement, preferably 20 seconds or more and 20 minutes or less, and more preferably 30 seconds or more and 15 minutes or less. Accordingly, the melt-kneading conditions of the temperature and time are preferably set to satisfy these melt-kneading conditions.

The protein is desirably previously pulverized before mixing with the biodegradable polyester-based resin. Thus, the protein is uniformly dispersed in the biodegradable resin composition, and a molded article superior not only in the biodegradability but also in the mechanical properties and the appearance can be obtained.

The pulverizing step can be performed using a pulverizer, such as a stone mortar, a cutter mill, a jet mill, or a crush mill. The particle diameter (average particular diameter) after pulverizing is as described above.

The protein is preferably previously dried before mixing with the biodegradable polyester-based resin. By drying, a decrease in the molecular weight due to hydrolysis of the resin is less likely to occur in mixing with a resin, and the mechanical strength is less likely to decrease. The moisture content of the protein after drying is preferably 20% by mass or less, more preferably 10% by mass or less, and particularly preferably 5% by mass or less.

For drying the protein, a batch drier, such as a hot air drier, a vacuum drier, or an inert oven, or a continuous drier, such as a vibration fluid bed drier, an air flow drier, or a cylindrical drier, can be used. The drying temperature is generally in the range of 40°C to 200°C. A higher drying temperature leads to a better drying efficiency, and a lower drying temperature is less likely to cause poorer appearance due to discoloration or alteration in quality and an odor.

<Degree of Biodegradability>

As used herein, the "biodegradability" means a property that a resin is degraded by the action of microorganisms into low molecular components, such as oligomers or monomers, through hydrolysis or the like, and the low molecular components are further degraded into water, carbon dioxide, and the like.

In this description, the degree of biodegradability is calculated as a ratio of the biological oxygen demand (BOD) to the theoretical oxygen demand (ThOD).

The degree of biodegradability in sea water is measured according to ISO 14851:1999 (Determination of the ultimate aerobic biodegradability of plastic materials in an aqueous medium - Method by measuring the oxygen demand in a closed respirometer).

The degree of biodegradability of a resin generally depends on the temperature in the environment where the resin is present. When the polyester-based resin according to the present invention is subjected to biodegradation in the sea, it is considered that the crystal structure of the polyester-based resin loosens and the molecular main chain is allowed to easily rotate and vibrate, resulting in easy biodegradation. Accordingly, the glass transition temperature of the polyester-based resin is preferably lower than the temperature of the sea water. Thus, the glass transition temperature of the polyester-based resin according to the present invention is preferably 20°C or lower. In terms of the sea-biodegradability, the polyester-based resin according to the present invention is preferably not a polylactic acid.

The biodegradable resin composition according to this embodiment preferably has a degree of biodegradability at an arbitrary time point after the start of a biodegradability test that is 1.4 times or more higher than the degree of biodegradability of a composition obtained by eliminating the protein from the biodegradable resin composition according to this embodiment (hereinafter sometimes referred to as "basic composition") (hereinafter, the increasing rate in degree of biodegradability based on the degree of biodegradability of the basic composition is sometimes referred to as "biodegradation increasing degree"). Specifically, the biodegradation increasing degree of the biodegradable resin composition according to this embodiment at 28 days after the start of a biodegradability test according to the above standard is preferably 1.5 times or more, further preferably 1.7 times or more, and particularly preferably 2.0 times or more.

In this description, a high biodegradability means a high biodegradation increasing degree of a biodegradable resin composition at an arbitrary time point after the start of a biodegradability test.

[Method of Biodegrading Polyester-based Resin]

As described above, since biodegradation of a polyester-based resin can be promoted by a protein, the biodegradation resin composition of the present invention can be applied to a method of biodegrading a polyester-based resin. In other words, the biodegradation resin composition of the present invention can be applied to a method of biodegrading a polyester-based resin in sea water in the presence of a protein. Here, preferred ranges and the like of the polyester-based resin, the protein, and the other resins or components suitable for this method are as described above.

[Biodegradable Resin Molded Article]

The biodegradable resin composition of the present invention can be molded by various molding methods that can be applied to general purpose plastics. That is, the biodegradable resin composition of the present invention is preferably molded and used as a biodegradable resin molded article. Examples of the molding method include compression molding (compression molding, lamination molding, stampable molding), injection molding, extrusion molding or co-extrusion molding (film molding by inflation method or T-die method, laminate molding, pipe molding, electrical wire/cable molding, deformed material molding), thermal press molding, hollow molding (various types of blow molding), calendar molding, solid molding (uniaxial stretch molding, biaxial stretch molding, rolling molding, stretch orientation nonwoven fabric molding ), thermal molding (vacuum molding, compressed air molding), plasticity processing, powder molding (rotation molding), and various nonwoven fabric molding (dry method, bonding method, entangling method, spun bonding method). Among them, injection molding, extrusion molding, compression molding, or thermal press molding, in particular, extrusion molding or injection molding, is suitably applied. As a specific shape, application to a sheet, a film, and a container is preferred, and a film or a sheet is more preferred.

To the biodegradable polyester-based resin molded article of the present invention obtained by molding the biodegradable resin composition of the present invention, various types of secondary processing can be applied for the purpose of imparting a chemical function, an electrical function, a magnetic function, a physical function, a friction/abrasion/lubrication function, an optical function, a thermal function, a surface function, such as biocompatibility. Examples of the secondary processing include embossing, painting, bonding, printing, metalizing (plating or the like), mechanical processing, surface treatment (antistatic treatment, corona discharge treatment, plasma treatment, photochromism treatment, physical deposition, chemical deposition, coating, etc.).

[Use]

The biodegradable resin composition of the present invention is suitably used in wide variety of uses, for example, packaging materials for packaging liquid products, powder products, and solid products, such as various foods, drugs, and sundries, agricultural materials, and construction materials. Specific examples of the use include injection molding products (for example, trays of fresh foods, containers of fast foods, containers of coffee capsule, cutlery, outdoor leisure products), extrusion molding products (for example, films, sheets, fishing lines, fishing nets, vegetation nets, secondary processing sheets, water retention sheets), and hollow molding products (bottles and the like). Further examples include other agricultural films, coating materials, fertilizer coating materials, seeding pots, lamination films, plates, oriented sheets, monofilaments, nonwoven fabrics, flat yarns, staples, crimped fibers, tapes with tearing strips, split yarns, composite fibers, blow bottles, shopping bags, garbage bags, compost bags, cosmetic containers, detergent containers, bleach containers, ropes, bundle materials, sanitary cover stock materials, cold boxes, cushion material films, multifilaments, synthetic papers, and surgical sutures, suture threads, artificial bones, artificial skins, and DDS, such as microcapsules, and wound dressing materials for medical use.

In particular, the biodegradable resin molded article of the present invention is suitable for packaging materials, such as shopping bags, wrapping films, trays of fresh foods, containers of fast foods, and lunch boxes.

Examples

The present invention will be more specifically described below with reference to Examples and Comparative Examples, but the present invention is not to be limited by the examples without departing from the gist of the present invention. Various conditions of productions and values of evaluation results in the following Examples have a meaning as a preferred value as the upper limit or the lower limit in the embodiments of the present invention, and a preferred range may be a range defined by a combination of the upper or lower limit and a value of the following Example, or a combination of values of the following Examples.

[Method of Analyzing Properties and Composition]

(Method of Measuring Enthalpy of Fusion)

Using a differential scanning calorimeter "DSC7020" manufactured by Hitachi High-Tech Science Corporation, the temperature was increased from 25°C to 200°C at 10°C/min, then was decreased from 200°C to -50°C at 10°C/min, and then was further increased from -50°C to 200°C at 10°C/min as a second temperature increase, and an area of an endothermic peak corresponding to fusion of a sample during the second temperature increase was taken as the enthalpy of fusion ($\Delta Hm$).

(Method of Measuring Tensile Elastic Modulus)

The tensile elastic modulus was measured by a method according to JIS K 7127:1999. Specifically, a heat press sheet of each resin was produced as follows. On a PTFE tape of 150 mm $\times$ 150 mm, a surface-mold-release-treated metal frame was placed, 1.6 g of a resin was measured inside the metal frame, and then, a PTFE tape of 150 mm $\times$ 150 mm was placed thereon. Between two iron plates (160 mm $\times$ 160 mm, thickness 3 mm), the resin interposed between the PTFF tapes was placed, and was subjected to thermal press using a thermal press machine, followed by cooling press using a cooling press machine, whereby a thermal press sheet of 70 mm $\times$ 70 mm $\times$0.2 mm thickness was obtained. Here, the thermal press temperature was 180°C, and the thermal press time was 2 minutes for preheating and 2 minutes for pressing. The cooling press temperature was 20°C and the cooling press time was 2 minutes. The resulting thermal press sheet was punched with a No. 8 dumbbell die to produce a test piece. The test piece was uniaxially elongated at a rate of 50 mm/min, and the initial slope of the obtained stress-strain curve was taken as the tensile elastic modulus.

(Method of Measuring Glass Transition Temperature)

Into an aluminum sample container, 10 mg of a resin was put and used as a measurement sample. Subsequently, using a differential scanning calorimeter "DSC7020" manufactured by Hitachi High-Tech Science Corporation, in a nitrogen atmosphere, the temperature was increased from -100°C to 200°C at a rate of 10°C/min to obtain a DSC chart. The glass transition temperature was determined based on the base line shift on the low temperature side of a peak indicating the melting point in this chart. Specifically, a point at which the base line on the low temperature side was intersected with the contact point of the inflection point was read as a glass transition temperature.

(Method of Measuring Acid Value)

0.4 g of each resin was precisely weighed, and 25 mL of benzyl alcohol was added thereto, and the mixture was heated to 195°C and was stirred to dissolve the resin. Once the resin was dissolved, the container of the resin solution was cooled with an ice bath, and 2 mL of ethanol was added to the container. Titration was performed with a 0.01 N sodium hydroxide benzyl alcohol solution using an automatic titrator "GT100" manufactured by Mitsubishi Chemical Analytech Co., Ltd. (the titer was taken as A (ml)).

Next, the same measurement was performed using benzyl alcohol only to obtain a blank value (B (ml)). The acid value was calculated by the following formula.

$$\text{Terminal acid value (µeq/g)} = (A\text{-}B) \times F \times 10/W$$

A (ml): measured titer
B (ml): blank titer
F: factor of 0.01 N NaOH benzyl alcohol solution
W(g): weight of sample

(Method of Measuring Reduced Viscosity)

Into a 1:1 (mass ratio) mixed solvent of phenol and tetrachloroethane, each resin was dissolved at 0.5 g/dL to prepare a resin solution. Using an Ubellohde's viscometer, a passing time $t_0$ of the mixed solvent and a passing time t of the resin solution at 30°C were measured, and a relative viscosity $\eta_{rel}$ was calculated based on the following formula (i). Then, from the relative viscosity $\eta_{rel}$, a specific viscosity $\eta_{sp}$ was determined based on the following formula (ii).

$$\eta_{rel} = t/t_0 \qquad (i)$$

$$\eta_{sp} = \eta_{rel}\text{-}1 \qquad (ii)$$

The obtained specific viscosity $\eta_{sp}$ was divided by a concentration 0.5 g/dL to thereby determine a reduced viscosity $\eta_{sp}$/c.

(Method of Measuring Particle Diameter)

The average particular diameter of each protein was measured with an optical microscope. Specifically, protein particles were placed on a slide glass so as not to overlap on each other and were observed with an optical microscope "DSX510" manufactured by Olympus Corporation, and using an image analysis software thereof, equivalent circle diameters of 60 or more particles were obtained.

(Method of Measuring Composition)

The types and ratio of the structural units of each polyester-based resin were measured by $^1$H-NMR (nuclear magnetic resonance spectrometer).

[Biodegradable Polyester-based Resin]

The following polyester-based resins were used as the biodegradable polyester-based resin.

(a) (Polybutylene Succinate Adipate (PBSA))

Polybutylene succinate adipate (PBSA) "BioPBS™ FD92PB" manufactured by PTTMCC Biochem, melting point: 89°C

The PBSA had an enthalpy of fusion of 36.1 J/g, a tensile elastic modulus of 150 MPa, a glass transition temperature of -40°C, an acid value of 29 eq/t, and a reduced viscosity of 2.3 dL/g, as measured according to the aforementioned methods.

**(b) (Polybutylene Succinate Sebacate (PBSSe))**

Polybutylene succinate sebacate (PBSSe) was obtained as follows.

1,4-Butanediol (100.1 g), succinic acid (75.0 g), sebacic acid (32.1 g), trimethylol propane (0.34 g), and titanium tetrabutoxide (0.50 g) were heated with stirring under nitrogen at 200°C for 2 hours. Subsequently, the temperature was increased to 250°C under a reduced pressure, and a reaction was performed for 5 hours 15 minutes to produce a polymer, which was drawn in the form of strand into water and was cut to obtain a pellet-shaped PBSSe (molar ratio of succinic acid unit/sebacic acid unit: 80/20).

The PBSSe had an enthalpy of fusion of 92.9 J/g, a tensile elastic modulus of 280 MPa, a glass transition temperature of -30°C, an acid value of 28 peq/g, and a reduced viscosity of 1.8 dL/g, as measured according to the aforementioned methods.

**(c) (Polybutylene Sebacate Terephthalate (PBSeT))**

Polybutylene sebacate terephthalate (PBSeT) was obtained as follows.

1,4-Butanediol (85.10 g), sebacic acid (63.70 g), terephthalic acid (52.30 g), trimethylol propane (0.27 g), and titanium tetrabutoxide (0.53 g) were heated under nitrogen at 220°C for 2 hours with stirring. Subsequently, the temperature was increased to 240°C under a reduced pressure, and a reaction was performed for 3 hours 15 minutes to obtain a polymer, which was then drawn in the form of strand into water and was cut to thus obtain a pellet-shaped PBSeT (molar ratio of sebacic acid unit/terephthalic acid unit: 50/50).

PBSeT had an enthalpy of fusion of 13.1 J/g, a glass transition temperature of -40°C, an acid value of 24 peq/g, and a reduced viscosity of 1.3 dL/g, as measured according to the aforementioned methods.

**(d) (Polybutylene Glutarate Azelate (PBGAz))**

Polybutylene glutarate azelate (PBGAz) was obtained as follows.

1,4-Butanediol (63.90 g), glutaric acid (53.53 g), azelaic acid (19.07 g), trimethylol propane (0.22 g), and titanium tetrabutoxide (0.50 g) were heated under nitrogen at 200°C for 2 hours with stirring. Subsequently, the temperature was increased to 250°C under a reduced pressure, and a reaction was performed for 5 hours 30 minutes to obtain a polymer, which was then drawn in the form of strand into water and was cut to obtain a pellet-shaped PBGAz (molar ratio of glutaric acid unit/azelaic acid unit: 80/20).

PBGAz had an enthalpy of fusion of 39.3 J/g, a glass transition temperature of -70°C, an acid value of 9.3 peq/g, and a reduced viscosity of 1.55 dL/g, as measured according to the aforementioned methods.

**(e) (Polybutylene Glutarate Brassylate (PBGBr))**

Polybutylene glutarate brassylate (PBGBr) was obtained as follows.

1,4-Butanediol (61.8 g), glutaric acid (54.4 g), brassylic acid (19.1 g), trimethylol propane (0.21 g), and titanium tetrabutoxide (0.50 g) were heated under nitrogen at 200°C for 2 hours with stirring. Subsequently, the temperature was increased to 250°C under a reduced pressure, a reaction was performed for 5 hours to obtain a polymer, which was then drawn in the form of strand into water and was cut to obtain a pellet-shaped PBGAz (molar ratio of glutaric acid unit/brassylic acid unit; 84/16).

PBGBr had an enthalpy of fusion of 44.9 J/g, a glass transition temperature of -70°C, an acid value of 10.5 peq/g, and a reduced viscosity of 2.32 dL/g, as measured according to the aforementioned methods.

**(f) (Polybutylene Terephthalate/Adipate (PBAT))**

Polybutylene adipate terephthalate (PBAT) "Ecoflex C1200" manufactured by BASF was used.

The PBAT had an enthalpy of fusion of 20.0 J/g, a tensile elastic modulus of 80 MPa, a glass transition temperature of -40°C, and an acid value of 12.6 eq/t, as measured according to the aforementioned methods.

[Protein]

As the protein, the following proteins were each pulverized in a porcelain mortar, and powder that passed through a sieve having an opening of 150 μm (average particular diameter was 150 μm or less) was used. Since a protein is generally a mixture of many components, the molecular weights shown are each a molecular weight of a main component.

(i) Zein: "Zein" manufactured by Tokyo Chemical Industry Co., Ltd., molecular weight: 24,000 to 27,000, average particular diameter: 70 $\mu$m

(ii) Casein: "Casein" manufactured by NAKALAI TESQUE INC., molecular weight: 20,000 to 25,000, average particular diameter: 43 $\mu$m

(ii') Casein (2): "Casein" manufactured by Wako Pure Chemical Industries, molecular weight: 20,000 to 25,000, average particular diameter: 67 $\mu$m

(iii) Albumin: "Albumin" manufactured by FUJIFILM Wako Pure Chemical Corporation, molecular weight: 43,000, average particular diameter: 13 $\mu$m

(iv) Gelatin: "Gelatin" manufactured by NAKALAI TESQUE INC., molecular weight: 100,000, average particular diameter: 143 $\mu$m

(v) Gluten: "Gluten" manufactured by Tokyo Chemical Industry Co., Ltd., molecular weight: 36,000, average particular diameter: 14 $\mu$m

[Other Organic Component]

As the organic component other than the protein, the following compounds were allowed to pass through a sieve with an opening of 150 $\mu$m and used.

Starch: "Starch (soluble)" manufactured by FUJIFILM Wako Pure Chemical Corporation
Cellulose: "KC FLOCK W-400Y" manufactured by Nippon Paper Industries Co., Ltd.

[Examples 1 to 5, Comparative Examples 1 to 3]

Into 100 parts by mass of an aliphatic polyester-based resin (A-1), a protein or another organic component shown in Table 1 was blended in an amount of 3.1 parts by mass (in Comparative Example 1, only the aliphatic polyester-based resin (A)), and using a compact twin screw kneader ("Xplore Micro 15cc Twin Screw Compounder" manufactured by DSM Japan K.K.), melt-kneading was performed in a nitrogen atmosphere at 170°C for 4 minutes. The resulting resin composition was molded with a thermal press molding machine at 170°C into a sheet form having a thickness of 115 $\mu$m, and was cut into a 3-cm square, thus producing a sheet of a biodegradable resin composition. The resulting sheet was subjected to the following evaluation. The results are shown in Table 1.

<Sea-biodegradability Test>

Sea water was taken at a sandy beach in Yokkaichi Harbor, Yokkaichi, Mie (around a point of a north latitude of 34.94 degrees and an east longitude of 136.64 degrees) at 10 o'clock (low tide) on January 7, 2020. The sea water was filtered with a nylon mesh having an opening of 11 $\mu$m. Sea sand was taken from below the sea surface at the same point at the same time as the sea water. Particles that passed through a sieve having an opening of 2 mm and did not pass through a sieve having an opening of 0.3 mm were collected, and were washed with the filtered sea water to remove the floating substances. Into a glass tank (width: 60 cm, depth: 30 cm, height: 23 cm) equipped with a seawater circulation apparatus, a temperature adjusting apparatus, and an air stone (air blowing apparatus), the sea sand was spread into a thickness of about 1 cm, and 30 L (depth: 17 cm) of the sea water was put.

The sheet was arranged on the sand. While blowing air from the air stone and circulating the sea water, the water temperature was kept at 28°C and the tank was allowed to stand for 68 days.

The mass of the test piece was measured before and after the test, and the decrease in the mass was divided by the surface area (3 cm $\times$ 3 cm = 9 cm$^2$ for one face, 3 cm $\times$ 3 cm $\times$ 2 = 18 cm$^2$ for two faces) of the test piece to calculate a decrease in mass per unit area (mg/cm$^2$). The calculation formula was as follows.

$$\text{Decrease in mass per unit area (mg/cm}^2) = 10^3 \times \text{decrease in mass (g) / } (3 \times 3 \times 2)$$

The ratio to a decrease in mass per unit area in the case of only the biodegradable resin (Comparative Example 1) was calculated, and was defined as a sea-biodegradability increasing rate.

Table 1

| | Resin | | Protein or another organic component | Concentration of nitrogen atoms originating from protein in composition (% by mass) | Evaluation | |
|---|---|---|---|---|---|---|
| | Type | Amount (% by mass) | | | Decrease in mass per unit area (mg/cm$^2$) | Sea-biodegradability increasing rate (times) |
| Example 1 | PBSA | 97.0 | Zein | 15 | 1.38 | 2.30 |
| Example 2 | PBSA | 97.0 | Casein | 14 | 1.07 | 1.78 |
| Example 3 | PBSA | 97.0 | Albumin | 13 | 0.89 | 1.49 |
| Example 4 | PBSA | 97.0 | Gelatin | 16 | 0.89 | 1.48 |
| Example 5 | PBSA | 97.0 | Gluten | 12 | 0.87 | 1.45 |
| Comparative Example 1 | PBSA | 100.0 | none | - | 0.60 | - |
| Comparative Example 2 | PBSA | 97.0 | Starch | - | 0.81 | 1.35 |
| Comparative Example 3 | PBSA | 97.0 | Cellulose | - | 0.67 | 1.11 |

Table 1 confirmed that the biodegradable resin composition of the present invention had a sea-biodegradability increased due to a protein contained.

[Comparative Example 4]

The aliphatic polyester-based resin (A-1) was pulverized into a particle diameter (screening method) of 250 μm or less, thus obtaining a pulverized resin.

[Comparative Example 5]

PBSSe was pulverized into a particle diameter (screening method) of 250 μm or less, thus obtaining a pulverized resin.

[Comparative Example 6]

PBSeT was pulverized into a particle diameter (screening method) of 250 μm or less, thus obtaining a pulverized resin.

[Comparative Example 7]

PBGAz was pulverized into a particle diameter (screening method) of 250 μm or less, thus obtaining a pulverized resin.

[Comparative Example 8]

PBGBr was pulverized into a particle diameter (screening method) of 250 μm or less, thus obtaining a pulverized resin.

[Example 6 to 10]

Each pulverized resin and a protein were mixed in a total amount of 30 mg at a proportion shown in Table 2.

<Method of Measuring Degree of Biodegradability>

The degree of biodegradability of the resin composition of Examples 6 to 10 or the pulverized resin of Comparative Examples 4 to 8 was measured according to ISO 14851 as follows.

To a 510 mL brown bottle containing 30 mg of a sample, 100 mL of a mixed liquid of a standard test culture solution which was adjusted by a method according to ISO 14851 and sea water were added. The sea water used for mixing was taken in Sagami Bay or Tokyo Bay. A pressure sensor (OxiTop (Registered Tradename)-C manufactured by WTW) was attached to the brown bottle, and in a constant temperature environment at 25°C, the test liquid was stirred with a stirrer for 28 days, and the degree of biodegradability (%) was calculated based on the BOD measurement. The ratio thereof to a degree of biodegradability (%) of the case of the biodegradable resin alone corresponding to each composition (Comparative Examples 4 to 8) was calculated and was defined as a sea-biodegradable increasing rate. The results are shown in Table 2.

Table 2

| | Resin | | Protein or another organic component | Concentration of nitrogen atoms originating from protein in composition (% by mass) | Evaluation |
| | Type | Amount (% by mass) | | | Sea-biodegradability increasing rate (times) |
|---|---|---|---|---|---|
| Example 6 | PBSA | 97.0 | Albumin | 13 | 4.0 |
| Example 7 | PBSSe | 90.0 | Casein (2) | 14 | 2.3 |
| Example 8 | PBSeT | 90.0 | Casein (2) | 14 | 2.7 |
| Example 9 | PBGAz | 90.0 | Casein (2) | 14 | 1.5 |
| Example 10 | PBGBr | 90.0 | Casein (2) | 14 | 1.5 |
| Comparative Example 4 | PBSA | 100.0 | none | - | - |
| Comparative Example 5 | PBSSe | 100.0 | none | - | - |
| Comparative Example 6 | PBSeT | 100.0 | none | - | - |
| Comparative Example 7 | PBGAz | 100.0 | none | | - |
| Comparative Example 8 | PBGBr | 100.0 | none | | - |

Comparisons between Example 6 and Comparative Example 4, between Example 7 and Comparative Example 5, between Example 8 and Comparative Example 6, and between Example 9 and Comparative Example 8 confirmed that the biodegradable resin composition of the present invention had a sea-biodegradability increased due to a protein contained.

[Comparative Example 9]

PBAT was pulverized into a particle diameter (screening method) of 250 $\mu$m or less, thus obtaining a pulverized resin.

[Comparative Example 10]

With 27 mg of the pulverized resin of Comparative Example 9, 3 mg of the casein (2) was mixed.

The degree of biodegradability of the resin composition of Comparative Example 10 or the pulverized resin of Comparative Example 9 was measured according to ISO 14851 as follows. Then, only the mixed casein was degraded and the sea-biodegradability of PBAT did not increase.

Industrial Applicability

According to the biodegradable resin composition of the present invention, it is possible to provide a biodegradable resin composition that can increase the speed of biodegradation and the percentage of degradation of a polyester-based resin in the sea and that has good moldability, and a molded article of the biodegradable resin composition.

**Claims**

1. A biodegradable resin composition comprising a resin and a protein, the resin being contained in an amount of 40 to 99.9% by mass in the resin composition, the resin containing a polyester-based resin, the polyester-based resin having three or more structural units, at least one of the structural units being selected from a succinic acid unit, an azelaic acid unit, a sebacic acid unit, and a brassylic acid unit, provided that a degradation promoter for a biodegradable resin is excluded, the degradation promoter for a biodegradable resin containing cellulose, hemicellulose, and lignin, having a mass ratio of nitrogen to carbon of 0.04 or more, and having a mass ratio of a content of hemicellulose to a total content of cellulose and lignin of 0.2 or more.

2. The biodegradable resin composition according to claim 1, wherein the polyester-based resin has an enthalpy of fusion as defined below of 10 to 300 J/g: (enthalpy of fusion)
   using a differential scanning calorimeter "DSC7020" manufactured by Hitachi High-Tech Science Corporation, the temperature is increased from 25°C to 200°C at 10°C/min, then is decreased from 200°C to -50°C at 10°C/min, and is further increased from -50°C to 200°C at 10°C/min as a second temperature increase, and an area of an endothermic peak corresponding to fusion of a sample during the second temperature increase is taken as the enthalpy of fusion ($\Delta$Hm).

3. The biodegradable resin composition according to claim 1 or 2, wherein the polyester-based resin is at least one selected from the group consisting of polybutylene succinate adipate (PBSA), polybutylene glutarate azelate (PBGAz), polybutylene succinate sebacate (PBSSe), polybutylene sebacate terephthalate (PBSeT), and polybutylene glutarate brassylate (PBGBr).

4. The biodegradable resin composition according to any one of claims 1 to 3, wherein the protein has a molecular weight of 10,000 or more.

5. The biodegradable resin composition according to any one of claims 1 to 4, wherein the protein has an average particular diameter of 1 to 150 $\mu$m.

6. The biodegradable resin composition according to any one of claims 1 to 5, wherein the biodegradable resin composition has a concentration of nitrogen atoms originating from the protein contained therein of 50 ppm by mass or more.

7. The biodegradable resin composition according to any one of claims 1 to 6, wherein the protein is at least one selected from the group consisting of casein, zein, albumin, gelatin, and gluten.

8. A biodegradable resin molded article obtained by molding the biodegradable resin composition according to any one of claims 1 to 7.

9. The biodegradable resin molded article according to claim 8, wherein the biodegradable resin molded article is a film or a sheet.

10. A method of biodegrading a polyester-based resin, the method composing biodegrading the polyester-based resin in sea water in the presence of a protein.

| INTERNATIONAL SEARCH REPORT | International application No. |
| --- | --- |
| | PCT/JP2021/020286 |

**A. CLASSIFICATION OF SUBJECT MATTER**

Int.Cl. C08L67/00(2006.01)i, C08L89/00(2006.01)i, C08L101/16(2006.01)i
FI: C08L67/00ZBP, C08L101/16, C08L89/00ZAB

According to International Patent Classification (IPC) or to both national classification and IPC

**B. FIELDS SEARCHED**

Minimum documentation searched (classification system followed by classification symbols)
Int.Cl. C08L67/00, C08L89/00, C08L101/16

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2004-002687 A (IDEMITSU TECHNOFINE CO., LTD.)<br>08 January 2004 (2004-01-08), claims 1-5,<br>paragraphs [0009], [0012], [0016], [0020]-[0031],<br>examples 1-3, 5, 6 | 1-9<br>10 |
| X<br>Y<br>A | JP 2005-298687 A (KAO CORPORATION) 27 October 2005<br>(2005-10-27), paragraphs [0004], [0026] | 10<br>10<br>1-9 |
| A | JP 2002-167470 A (NIPPON PAPER INDUSTRIES CO.,<br>LTD.) 11 June 2002 (2002-06-11), paragraph [0034] | 1-10 |
| A | US 6635206 B1 (THE BOARD OF TRUSTEES OF THE<br>UNIVERSITY OF ILLINOIS) 21 October 2003 (2003-10-<br>21), claim 1 | 1-10 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 August 2021 | 17 August 2021 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2021/020286

| JP 2004-002687 A | 08 January 2004 | (Family: none) |
| JP 2005-298687 A | 27 October 2005 | (Family: none) |
| JP 2002-167470 A | 11 June 2002 | US 2002/0061583 A1<br>paragraph [0063]<br>EP 1191068 A2 |
| US 6635206 B1 | 21 October 2003 | WO 2001/083597 A2<br>claim 1<br>CA 2407729 A1 |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012505271 T

**Non-patent literature cited in the description**

- *J.Bacteriol.,* 1997, vol. 179, 4821